# EUROPÄISCHE PATENTSCHRIFT

(11) **EP 0 466 969 B1**
(45) Veröffentlichungstag und Bekanntmachung des Hinweises auf die Patenterteilung: **12.01.1994**
(21) Anmeldenummer: 90113990.7
(22) Anmeldetag: 20.07.1990
(51) Int. Cl.: G07F 7/10

(54) **Verfahren zur Verhinderung unzulässiger Abweichungen vom Ablaufprotokoll einer Anwendung bei einem Datenaustauschsystem**
Method for preventing unauthorised deviations from an application development protocol in a data exchange system
Méthode pour éviter des écarts inautorisés d'un protocole de déroulement d'une application dans un système d'échange de données

(43) Veröffentlichungstag der Anmeldung: 22.01.1992
(73) Patentinhaber: Siemens Nixdorf Informationssysteme Aktiengesellschaft, 33102 Paderborn (DE)
(72) Erfinder: Hueske, Thomas, Dipl.-Math., D-8000 München 40 (DE); Jost, Hildegard, Dipl.-Math., D-8000 München 80 (DE); Müller, Klaus, Dipl.-Math., D-8012 Ottobrunn (DE); Pfau, Axel, Dipl.-Math., D-8000 München 2 (DE)
(74) Vertreter: Fuchs, Franz-Josef, Dr.-Ing.

(56) Entgegenhaltungen:
- EP-A- 0 159 651
- EP-A- 0 190 733
- WO-A-87/07062
- DE-A- 3 736 190

## Beschreibung

Tragbare Datenträger sind magnetische, optische oder sonstige physikalische Speichereigenschaften nutzende Objekte. Wenn diesen Datenträgern Intelligenz in Form eines Mikroprozessors zugeordnet ist, sind diese Datentrager besonders vielseitig verwendbar und erfüllen höchste Anforderungen an die Datensicherheit. Am meisten verbreitet sind diese intelligenten Datenträger in Form von Chipkarten.

Die Chipkarte ist vielseitig anwendbar, beispielsweise als bargeldloses Zahlungsmittel, als Personal- oder Versicherungsausweis, als Schlüssel zum Zugang zu Rechnern und für alle sonstigen Anwendungen, bei denen die eindeutige Identifizierung eines Anwenders notwendig ist oder die Berechtigung eines Anwenders eine bestimmte Anwendung auszuführen, nachgewiesen werden muß. Ist eine einzige Chipkarte für mehrere solche Anwendungen verwendbar, so spricht man von einer multifunktionalen Chipkarte. Auf Grund ihres physikalischen Aufbaus - neben dem Prozessor sind auf dem Chip ein maskenprogrammierbarer ROM-Speicherbereich, ein als Arbeitsspeicher dienender schneller RAM-Speicherbereich und ein nicht flüchtiger, programmierbarer Speicherbereich (EEPROM-Speicherbereich) untergebracht - können die Chipkarten vom Kartenherausgeber durch entsprechende Programmierung des EEPROM-Speicherbereichs für viele Anwendungen programmiert werden. Bei jeder Anwendung müssen gemäß einem vorgegebenen Protokoll einige der im ROM-Speicherbereich abgelegten Basisfunktionen auf der Chipkarte abgearbeitet werden.

Aus EP-A-0 190 733 ist eine Chipkarte bekannt, der Kommandos zugeführt werden, die Basisfunktionen bezeichnen. Die Basisfunktionen sind in der Chipkarte gespeichert und werden dort in der Reihenfolge abgearbeitet, in der sie aufgerufen werden.

Im EEPROM-Speicherbereich ist für jede Anwendung ein Anwendungsdatenfeld eingerichtet. Auf in einem solchen Feld eingetragene Daten kann eine Basisfunktion nur zugreifen, wenn diese Anwendung vorher aufgerufen wurde. Im Anwendungsdatenfeld können Daten mit unterschiedlichen Zugriffsbedingungen abgelegt sein. Es kann beispielsweise festgelegt sein, daß Daten nur dann gelesen oder verändert werden können, wenn sich der Chipkartenbenutzer durch eine PIN-Nummer (persönliche Identifikationsnummer) zu erkennen gibt.

Die Informationen, welche Anwendung vorliegt, welche Basisfunktion abgearbeitet werden soll, und die zur Berechtigungsprüfung erforderlichen Informationen erhält die Chipkarte durch Datenaustausch mit einem Terminal. Mit diesem Terminal ist die Chipkarte direkt durch elektrische Kontakte oder indirekt über optische oder induktive Koppeleinrichtungen verbunden. Vom Terminal aus können also Basisfunktionen zur Abarbeitung auf der Chipkarte aufgerufen werden. Die Reihenfolge, in der diese Basisfunktionen aufgerufen werden, wird demnach vom Terminal bestimmt. Da es aus sicherheitstechnischen Gründen erforderlich ist, die Basisfunktionen in einer bestimmten Reihenfolge abzuarbeiten, besteht durch eine mögliche Manipulation am Terminal, durch die die Ablaufreihenfolge verändert werden könnte, oder durch die bestimmte Basisfunktionen ausgelassen werden könnten, ein Sicherheitsrisiko.

Der Erfindung liegt die Aufgabe zugrunde, bei einem Datenaustauschsystem der eingangs genannten Art das sicherheitstechnische Risiko der unzulässigen, durch Manipulation am Terminal herbeigeführten Veränderung eines Ablaufprotokolls einer Anwendung auszuschalten.

Diese Aufgabe wird erfindungsgemäß durch die in Patentansprüche 1 und 21 angegebenen Merkmale gelöst.

Durch die Speicherung der zulässigen Protokollabläufe auf dem Datenträger selbst und der erfindungsgemäßen Nutzung dieser Speicherung im Zusammenwirken mit dem Zustandsspeicherbereich, wird die Sicherheit des Datenaustauschsystems zusätzlich erhöht. Der Datenträger selbst kann Manipulationen am Terminal erkennen und geeignete Gegenmaßnahmen einleiten. Zudem kann das erfindungsgemäße Verfahren für beliebige Anwendungen eingesetzt werden.

Besondere Ausgestaltungen und Weiterbildungen des erfindungsgemäßen Verfahrens und einer Vorrichtung zur Durchführung des Verfahrens sind in den Unteransprüchen angegeben.

Im folgenden wird ein Ausführungsbeispiel der Erfindung anhand der Zeichnungen näher erläutert. Dabei zeigen
FIG 1 eine Datenaustauschvorrichtung zur Durchführung des erfindungsgemäßen Verfahrens,
FIG 2 ein Ablaufdiagramm einer Anwendung,
FIG 3 eine Nachfolgertabelle zum Ablaufdiagramm,
FIG 4 Auszüge aus einer Steuerliste zum Ablaufdiagramm und
FIG 5 einen Zustandsspeicherbereich des Datenträgers.

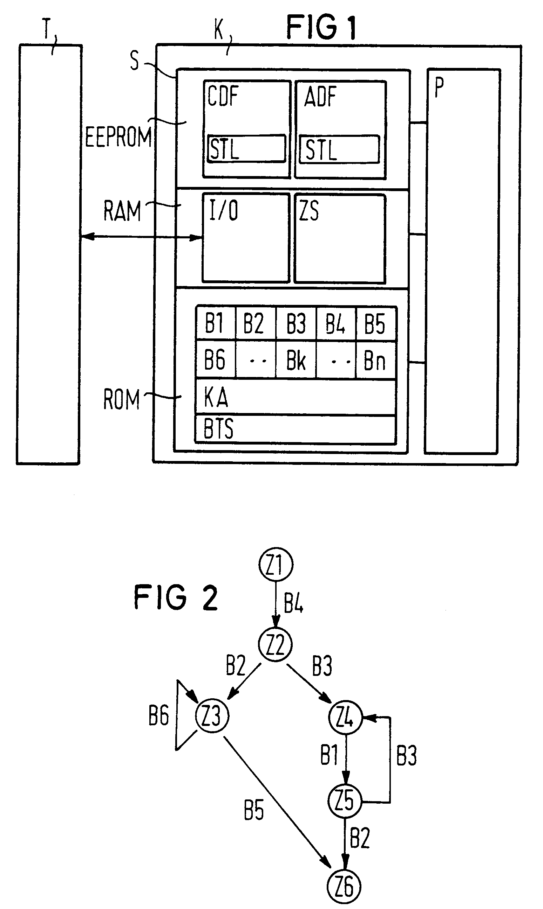

FIG 1 zeigt ein Datenaustauschsystem, bestehend aus einem vorzugsweise als Chipkarte K ausgebildeten Datenträger und einem Terminal T. Das Terminal T ist ein mit einer Schnittstelle zum Datenaustausch mit einer Chipkarte K ausgestattetes Datenein-/ausgabegrät einer Datenverarbeitungsanlage, beispielsweise ein Geldautomat, ein Kontoauszugdrucker, eine Personenidentifizierungseinrichtung oder auch ein entsprechend ausgerüsteter Telefonapparat.

Anstelle einer Chipkarte K sind auch andere Datenträger denkbar, die von der geometrischen Form der Chipkarte K mehr oder weniger abweichen. Maßgeblich ist lediglich, daß der Datenträger einen Prozessor P und einen Speicher S enthält. Im Ausführungsbeispiel sind die Chipkarte K und das Terminal T über elektrische Kontakte lösbar miteinander verbunden.

Der Speicher S der Chipkarte K ist in drei sich in der Speichertechnik unterscheidende Bereiche eingeteilt: Ein elektrisch lösch- und wiederbeschreibbarer Speicherteil EEPROM, ein schneller, als Arbeitsspeicher benutzter schreib- und lesbarer Speicher RAM und ein maskenprogrammierbarer Speicherbereich ROM. Gemäß ihrer Speichereigenschaften werden die drei Speicherbereiche unterschiedlich genutzt. Im maskenprogrammierbaren Speicherbereich ROM sind vom Kartenhersteller die anwenderunabhängigen, universell anwendbaren Daten und Programme gespeichert. Unter anderem sind in diesem maskenprogrammierbaren Speicherbereich ROM mehrere Basisfunktionen B mit den Basisfunktionsbezeichnungen B1...Bn, Krypto-Algorithmen KA beispielsweise zur Verschlüsselung der Daten beim Datenaustausch und ein Betriebssystem BTS der Chipkarte K eingetragen. Im schreib- und lesbaren Speicherbereich RAM werden solche Daten abgelegt, die während der Dauer einer Verbindung zwischen Terminal T und Chipkarte K benötigt werden. Unter anderem sind das die Ein-/Ausgangsdaten I/O und Daten, die in einem Zustandsspeicherbereich ZS abgelegt werden. Im elektrisch schreib- und löschbaren Speicherbereich EEPROM werden die vom Kartenherausgeber festgelegten Daten gespeichert. Dieser Speicherbereich EEPROM enthält in einem sogenannten Gemeinschaftsdatenfeld CDF hinterlegte Daten, die unabhängig von einer speziellen Anwendung verwendet werden können und Daten, auf die nur bezüglich einer Anwendung zugegriffen werden kann. Diese anwendungsspezifischen Daten sind in sogenannten Anwendungsdatenfeldern ADF abgelegt. Das Gemeinschaftsdatenfeld CDF und die Anwendungsdatenfelder ADF enthalten zusätzlich sogenannte Steuerlisten STL, in denen jeweils mindestens die Ablaufreihenfolge einer Anwendung festgelegt ist. Eine einem bestimmten Anwendungsdatenfeld ADF zugeordnete Steuerliste STL kann auch außerhalb des Anwendungsdatenfeldes ADF im Gemeinschaftsdatenfeld CDF gespeichert werden. Dies ist immer dann sinnvoll, wenn für verschiedene Anwendungen die gleiche Ablaufreihenfolge vorgeschrieben ist. Da die Steuerliste STL dann für zwei oder mehrere solcher Anwendungen nur einmal gespeichert werden muß kann Speicherplatz gespart werden.

In FIG 2 ist das Ablaufdiagramm einer Anwendung dargestellt. Ausgehend von einem Anfangszustand Z1 folgt durch Abarbeitung einer vierten Basisfunktion B4 auf den Anfangszustand Z1 ein zweiter Zustand Z2. Von diesem zweiten Zustand Z2 ausgehend, ist alternativ die Abarbeitung zweier Basisfunktionen B2, B3 möglich. Mit erfolgreicher Abarbeitung der zweiten Basisfunktion B2 kommt die Anwendung in einen dritten Zustand Z3 und mit der erfolgreichen Abarbeitung der dritten Basisfunktion B3 gerät die Anwendung in einen vierten Zustand Z4. Vom vierten Zustand Z4 ausgehend ist nur die Abarbeitung der ersten Basisfunktion B1 erlaubt, wodurch die Anwendung in einen fünften Zustand Z5 gerät. Von diesem fünften Zustand Z5 ausgehend, ist entweder die Abarbeitung der zweiten Basisfunktion B2 oder der dritten Basisfunktion B3 zugelassen, während die Abarbeitung der dritten Basisfunktion B3 zum vierten Zustand Z4 der Anwendung zurückführt, führt die Abarbeitung der zweiten Basisfunktion B2 zu einem Endzustand Z6 der Anwendung. Wenn, vom zweiten Zustand Z2 ausgehend, die zweite Basisfunktion B2 abgearbeitet wird, gerät die Anwendung in den dritten Zustand Z3. Von diesem Zustand Z3 ausgehend ist lediglich die Abarbeitung der fünften Basisfunktion B5 zulässig, die zum Endzustand Z6 der Anwendung führt. Zusätzlich ist bei jedem Zustand Z der Anwendung die Abarbeitung einer sechsten Basisfunktion B6 und einer schließenden Basisfunktion BC erlaubt. Stellvertretend für sämtliche sechsten Basisfunktionen B6 ist diese nur beim dritten Zustand Z3 der Anwendung in der FIG 2 eingezeichnet. Die Abarbeitung der sechsten Basisfunktion B6 führt immer wieder zu dem Zustand Z zurück, von dem sie ausging. Die Abarbeitung der schließenden Basisfunktion BC führt stets zur Beendigung der Anwendung.

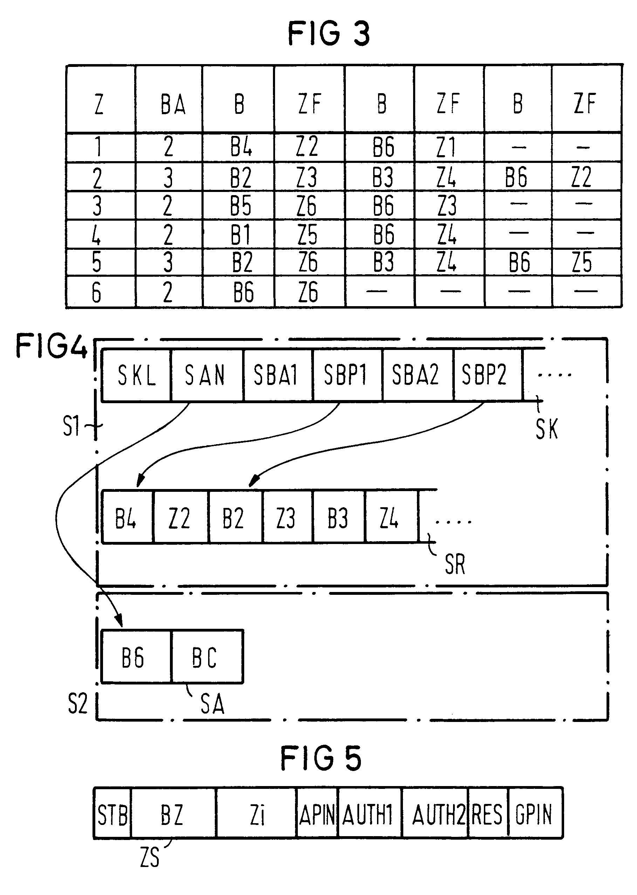

In FIG 3 ist eine Nachfolgertabelle abgebildet. In der ersten Spalte sind sämtliche innerhalb der Anwendung möglichen Zustände Z mit den Nummern 1 bis 6 eingetragen. In der zweiten Spalte ist zu jedem Zustand die Anzahl BA der zulässigen Basisfunktionen B eingetragen. Gemäß dem Ablaufdiagramm aus FIG 2 sind dies zwei Basisfunktionen B zum ersten Zustand Z1, drei Basisfunktionen B zum zweiten Zustand Z2, zwei Basisfunktionen B zum dritten Zustand Z3, zwei Basisfunktionen B zum vierten Zustand Z4, drei Basisfunktionen B zum fünften Zustand Z5 und zwei Basisfunktionen B zum sechsten Zustand Z6. Da das Beenden einer Anwendung keinen Anwendungszustand zur Folge hat, ist die bei jedem Zustand Z mögliche schließende Basisfunktion BC in der Nachfolgertabelle der FIG 3 nicht berücksichtigt. Nach der zweiten Spalte sind in der Tabelle mehrere Spaltenpaare angegeben. Die Zahl der Spaltenpaare entspricht der maximalen Anzahl BA der zulässigen Basisfunktionen B, die auf einen Zustand Z folgen können. Jedes Spaltenpaar besteht aus einer Spalte, in der die Nummer B1...B6 der jeweils zulässigen Basisfunktion B angegeben ist und aus einer zweiten Spalte, in die die Folgezustandsbezeichnung ZF, des auf den jeweiligen Zustand Z nach Abarbeitung einer Basisfunktion B folgenden Zustandes Z1...Z6 eingetragen ist. So sind beispielsweise im zweiten Zustand Z2 drei Basisfunktionen B zur Abarbeitung zugelassen, nämlich die zweite Basisfunktion B2, die dritte Basisfunktion B3 und die sechste Basisfunktion B6. Auf die zweite Basisfunktion B2 folgt der dritte Zustand Z3, auf die dritte Basisfunktion B3 folgt der vierte Zustand Z4 und auf die sechste Basisfunktion B6 folgt der zweite Zustand Z2.

Die Nachfolgertabelle gemäß FIG 3 könnte in dieser Form zwar abgespeichert werden; diese Speicherform hätte aber einen hohen Aufwand bei der Auswertung dieser Tabelle zur Folge. Deshalb wird die Nachfolgetabelle in Form einer Steuerliste STL, wie sie in FIG 4 angegeben ist, gespeichert.

FIG 4 zeigt ausschnittsweise eine Steuerliste STL, die in zwei Speicherbereiche S1 und S2 eingetragen ist. Im Speicherbereich S1 sind ein Steuerlistenkopf SK und ein Steuerlistenrumpf SR untergebracht und im Speicherbereich 52 ist eine Ausnahmenliste SA abgelegt. Der Steuerlistenkopf SK enthält je einen Speicherplatz für eine Steuerlistenkopflänge SKL und für eine Ausnahmenlistenblocknummer SAN. Desweiteren enthält der Steuerlistenkopf SK nacheinander den zulässigen Zuständen Z in aufsteigender Reihenfolge zugeordnete Speicherplatzpaare, in die jeweils die Anzahl SBA der beim betreffenden Zustand Z zulässigen Basisfunktionen B (mit Ausnahme der Basisfunktionen B, dessen Basisfunktionsbezeichnungen Bn in einer Ausnahmenliste SA eingetragen sind) und ein Pointer SBP eingetragen sind. Dieser Pointer SBP zeigt auf einen Speicherplatz im Steuerlistenrumpf SR, an dem die zulässigen Basisfunktionen B und ihre Folgezustände ZF abgelegt sind. Der Steuerlistenrumpf SR besteht aus Gruppen von Datentupeln, wobei auf den Anfang jeder Gruppe der Pointer SBP aus dem Steuerlistenkopf SK zeigt. Ein solches Tupel setzt sich aus einem Speicherplatz für die Bezeichnung einer Basisfunktion B und einem Speicherplatz für eine Folgezustandsbezeichnung ZF eines zwingend auf die im Tupel bezeichnete Basisfunktion B folgenden Zustandes Z zusammen. Wie die FIG 4 zeigt, sind im Steuerlistenkopf SK dem ersten Zustand Z1 eine Funktionsanzahl SBA1 und ein Pointer SBP1 zugeordnet. Der Pointer SBP1 weist auf die dem ersten Zustand Z1 zugeordnete Gruppe im Steuerlistenrumpf SR, die ein Datentupel enthält. In die Speicherplätze dieses Datentupels sind die Bezeichnung der vierten Basisfunktion B4 und die Folgezustandsbezeichnung ZF des auf die erfolgreiche Abarbeitung der vierten Basisfunktion B4 folgenden zweiten Zustandes Z2 eingetragen. Diese Eintragungen entsprechen den Eintragungen, die an entsprechender Stelle aus FIG 2 bzw. FIG 3 entnehmbar sind.

Da zu allen Zuständen Z der Anwendung die Abarbeitung der sechsten Basisfunktion B6 und die Abarbeitung der die Anwendung beendenden schließenden Basisfunktion BC zulässig ist, ist es vorteilhaft, diese Basisfunktionen nicht im Steuerlistenrumpf SR einzutragen. Durch die Einrichtung der Ausnahmenliste SA im zweiten Speicherbereich S2 können die Bezeichnungen der bei jedem Zustand Z zulässigen Basisfunktionen B6, BC speicherplatzsparend in eine Steuerliste STL eingefügt werden. Im Steuerlistenkopf SK ist in den Speicherplatz neben der Steuerlistenkopflänge SKL eine Ausnahmenlistenblocknummer SAN eingetragen. Durch diese Nummer wird die Ausnahmenliste SA der Anwendung zugeordnet. Durch diese Art der Ausnahmenlistenzuordnung und gemeinsam mit der Speicherung der Ausnahmenliste SA im Gemeinschaftsdatenfeld CDF ist es auch möglich, eine Ausnahmenliste SA für verschiedene Anwendungen zu verwenden.

FIG 5 zeigt eine spezielle Ausführung des Zustandsspeicherbereiches ZS. Der Zustandsspeicher ZS enthält Informationen zum Protokollablauf und zur Datenzugriffskontrolle. Zu den Informationen zum Protokollablauf gehören die Blocknummer STB der Steuerliste STL, die Bezeichnung der zuletzt erfolgreich abgearbeiteten Basisfunktion B, die im Basisfunktionsspeicherplatz BZ eingetragen ist und die Information über den aktuellen Protokollzustand Z, die im Protokollzustandsspeicherplatz Zi abgelegt ist. Die Speicherplätze zur Datenzugriffskontrolle umfassen einen Platz APIN für die Kennzeichnung einer erfolgreich durchgeführten PIN-Prüfung innerhalb der Anwendung, zwei Speicherplätze zum Ablegen der Information, ob zwei verschiedene Authentizitätsprüfungen AUTH1, AUTH2 erfolgreich durchgeführt wurden, einige Reservespeicherplätze RES und einen Speicherplatz, in dem die Information eingetragen wird, ob eine globale PIN-Prüfung GPIN erfolgreich durchgeführt wurde.

Im folgenden wird der Ablauf des erfindungsgemäßen Verfahrens unter Einbeziehung der oben beschriebenen Vorrichtung erläutert.

Mit dem Einstecken einer Chipkarte K in das Terminal T wird mittels elektrischer Kontakte oder gegebenenfalls auch kontaktlos eine elektrische Verbindung zwischen Terminal T und Chipkarte K hergestellt. Diese Verbindung wirkt sowohl hinsichtlich der Stromversorgung als auch bezüglich der Ankopplung der Ein-/Ausgabeeinrichtungen I/O des Terminals T und der Chipkarte K. Durch das Einstecken der Chipkarte K wird der gesamte Arbeitsspeicherbereich in einen bestimmten Zustand - z.B. alle Bit = 0 -zurückgesetzt.

Das Terminal T ist in diesem Beispiel einer bestimmten Anwendung - beispielsweise einem Geldautomaten einer Bank - zugeordnet. Die jeweilige Art der Anwendung wird der Chipkarte K in der Weise mitgeteilt, daß das Terminal T ein spezifisches Applikationskommando an die Chipkarte K überträgt. Auf der Chipkarte K wird nun überprüft, ob auf der Chipkarte K ein Anwendungsdatenfeld ADF für diese spezielle Anwendung vorhanden ist. Ist dieses Anwendungsdatenfeld ADF vorhanden, findet eine teilweise Initialisierung des Zustandsspeicherbereichs ZS statt. Diese Initialisierung hat zur Folge, daß die Blocknummer STB der dieser Anwendung zugeordneten, im Anwendungsdatenfeld ADF oder im Gemeinschaftsdatenfeld CDF vermerkten Steuerliste STL im Zustandsspeicherbereich ZS eingetragen wird und der Protokollzustandsspeicherplatz Zi, in dem der aktuelle Anwendungszustand Z eingetragen werden muß, auf den ersten Zustand Z1 gesetzt wird. Desweiteren werden sämtliche Bit der anwendungsbezogenen Speicherplätze zurückgesetzt (beispielsweise 0). Die Bit der Speicherplätze für globale Daten bleiben unverändert.

Nach der Meldung an das Terminal T, daß der Initialisierungsvorgang abgeschlossen ist, erfolgt die Übertragung eines Funktionskommandos vom Terminal T zur Chipkarte K, wobei dieses Funktionskommando, z.B. die vierte Basisfunktion B4 bezeichnet und die notwendigen Eingangsdaten für diese Basisfunktion B4 enthält. Die Chipkarte K befindet sich auf Grund der Eintragung im Zustandsspeicherbereich ZS im ersten Zustand Z1. Es wird nun im Steuerlistenkopf SK, der Steuerliste STL mit der im Zustandsspeicherbereich ZS eingetragenen Blocknummer STB, dasjenige Datenpaar gelesen, das dem ersten Zustand Z1 zugeordnet ist. Im Speicherplatz SBA1 ist eingetragen, daß in diesem ersten Zustand Z1 nur eine Basisfunktion B zulässig ist. Der neben diesem Speicherplatz eingetragene Pointer SBP1 zeigt auf die dem ersten Zustand Z1 zugeordnete Gruppe von Datentupeln. Dieses Tupel enthält die Bezeichnung der vierten Basisfunktion B4 und die Bezeichnung des auf die vierte Basisfunktion B4 folgenden Zustandes Z2. Der Vergleich der vom Terminal T übertragenen Basisfunktionsbezeichnung B4 und der Basisfunktionsbezeichnung B4, die im Datentupel des Steuerlistenrumpfes SR eingetragen ist, liefert ein positives Ergebnis. Auf Grund dieses positiven Vergleichsergebnisses wird die vierte Basisfunktion B4 unter Verwendung der mit dem Funktionskommando übertragenen Eingangsparameter abgearbeitet. Unter der Annahme, daß die vierte Basisfunktion B4, die für die PIN-Prüfung zuständige Funktion ist, und daß die PIN-Nummer vor dem Funktionsaufruf am Terminal T richtig eingegeben wurde, liefert die vierte Basisfunktion B4 das Ergebnis, daß die PIN-Prüfung erfolgreiche vorgenommen wurde. Am Basisfunktionsspeicherplatz BZ für die zuletzt erfolgreich ausgeführte Basisfunktion B des Zustandsspeicherbereiches ZS wird die Bezeichnung der vierten Basisfunktion B4 eingetragen. Zusätzlich wird an einem der Speicherplätze APIN oder GPIN, beispielsweise durch Setzen eines Bit, die erfolgreich ausgeführte PIN-Prüfung vermerkt. Welches Bit der beiden Speicherplätze gesetzt wird hängt davon ab, ob mit dem gleichen Terminal T mehrere Anwendungen realisierbar sind und davon, ob für alle Anwendungen, für die die Chipkarte K zugelassen ist, die gleiche PIN-Nummer erforderlich ist. Da im beschriebenen Fall das Terminal T ausschließlich dem Geldautomaten zugeordnet ist und damit nur eine Anwendung mit diesem Terminal T durchgeführt werden kann, wird der Speicherplatz APIN im Zustandsspeicherbereich ZS auf 1 gesetzt.

Der Zustand Z der Anwendung wird dadurch in den zweiten Zustand Z2 übergeführt, daß der im Datentupel im Steuerlistenrumpf SR neben der Basisfunktionsbezeichnung B4 in Form einer definierten Bitfolge eingetragene Zustand Z2 in den Protokollzustandsspeicherplatz Zi des Zustandsspeicherbereichs ZS eingetragen wird.

Nachdem ein Antwortsignal, das dem Terminal T die erfolgreiche Abarbeitung der vierten Basisfunktion B4 signalisiert, von der Chipkarte K zum Terminal T übertragen wurde, ist der erste Vorgang abgeschlossen. Die Chipkarte K ist wieder bereit, eine Information hier in Form eines Funktionskommandos, zu empfangen.

Das Terminal T überträgt nun ein zweites Funktionskommando zur Chipkarte K. Dieses Funktionskommando bezeichnet die dritte Basisfunktion B3 und beinhaltet die Eingangsparameter dieser Basisfunktion B3. Im Steuerlistenkopf SK wird das jeweilige Datenpaar gelesen, das dem zweiten Zustand Z2 zugeordnet ist. Im Speicherplatz SBA2, der die Anzahl der zulässigen Basisfunktionen B angibt steht die Zahl zwei. Der zugehörige Pointer SBP2 zeigt auf den ersten Speicherplatz, der dem zweiten Zustand Z2 zugeordneten Gruppe von Datentupeln im Steuerlistenrumpf SR.

Die in dieser Gruppe eingetragenen Basisfunktionsbezeichnungen B2, B3 werden mit der Basisfunktionsbezeichnung B3, die mit dem Funktionskommando zur Chipkarte K übertragen wurde, verglichen. Der Vergleich fällt positiv aus. Nach erfolgreicher Abarbeitung der dritten Basisfunktion B3 wird die Anwendung der Chipkarte K in den Zustand Z4 versetzt. Unter der Annahme, daß im Zuge der Abarbeitung der Basisfunktion B3 auf im Anwendungsdatenfeld ADF abgelegte Daten zugegriffen werden muß und dieser Zugriff nur zulässig ist, wenn vorher eine PIN-Prüfung erfolgreich durchgeführt wurde, werden vor Beginn der Abarbeitung der dritten Basisfunktion B3 die PIN-Speicherplätze APIN, GPIN im Zustandsspeicherbereich ZS gelesen. Nur wenn eines der beiden Bit auf 1 gesetzt ist, wird die dritte Basisfunktion B3 abgearbeitet. Ist diese Abarbeitung beendet, wird in den Basisfunktionsspeicherplatz BZ des Zustandsspeicherbereichs ZS die Bezeichnung der dritten Basisfunktion B3 eingetragen und im Protokollzustandsspeicherplatz Zi der vierte Zustand Z4 eingetragen. Zusätzlich wird ein Antwortsignal zum Terminal T übertragen.

Mit dem nächsten Funktionskommando wird die sechste Basisfunktion B6 angefordert und die notwendigen Eingangsparameter zur Chipkarte K übertragen. Im Steuerlistenkopf SK wird das dem vierten Zustand Z4 zugeordnete Datenpaar gelesen. Im Speicherplatz für die Funktionsanzahl SBA4 ist eine 1 eingetragen. Der Pointer SBP4 zeigt im Steuerlistenrumpf SR auf das dem vierten Zustand Z4 zugeordnete Datentupel. In diesem Datentupel steht die Basisfunktionsbezeichnung B1 der ersten Basisfunktion B und der entsprechende fünfte Folgezustand Z5. Ein Vergleich der Basisfunktionsbezeichnung B1 im Steuerlistenrumpf SR und der zur Chipkarte K übertragenen Basisfunktionsbezeichnung B6 liefert ein negatives Ergebnis. Daraufhin wird im Steuerlistenkopf SK die Ausnahmenlistenblocknummer SAN gelesen. Die in der Ausnahmenliste SA eingetragenen Basisfunktionsbezeichnungen B6, BC werden nun mit der zur Chipkarte K hin übertragenen Basisfunktionsbezeichnung B6 verglichen. Auf Grund des positiven Vergleichsergebnisses und unter der Voraussetzung, daß eventuelle Datenzugriffsbedingungen erfüllt sind, wird die sechste Basisfunktion B6 abgearbeitet. Trotz erfolgreicher Abarbeitung wird die Basisfunktionsbezeichnung B6 der sechsten Basisfunktion B nicht im Basisfunktionsspeicherplatz BZ des Zustandsspeicherbereichs ZS eingetragen. Die Eintragung im Protokollzustandsspeicherplatz Zi bleibt ebenfalls unverändert. Auch jetzt erfolgt die Übertragung eines Antwortsignals zum Terminal T.

Für den Fall, daß sich die Anwendung nach Abarbeitung der dritten Basisfunktion B3 im vierten Zustand Z4 befindet und vom Terminal T nochmals die dritte Basisfunktion B3 aufgerufen wird, liefern sämtliche Vergleiche im Steuerlistenrumpf SR und in der Ausnahmenliste SA ein negatives Ergebnis. In diesem Fall findet ein weiterer Vergleich statt. Die zur Chipkarte K übertragene Basisfunktionsbezeichnung B3 der dritten Basisfunktion B wird mit der im Zustandsspeicherbereich ZS im Basisfunktionsspeicherplatz BZ eingetragenen Basisfunktionsbezeichnung B3 verglichen. Dieser Vergleich liefert ein positives Ergebnis, wodurch die Abarbeitung der dritten Basisfunktion B3 zugelassen wird. Damit ist eine Wiederholbarkeit von Basisfunktionen B gewährleistet.

In entsprechender Weise werden die nachfolgend aufgerufenen Basisfunktionen B der Anwendungen behandelt, bis vom Terminal T die schließende Basisfunktion BC aufgerufen wird, die die Anwendung beendet. Die schließende Basisfunktion BC kann nach Abarbeitung jeder beliebigen Basisfunktion B aufgerufen werden, da die Basisfunktionsbezeichnung BC in der Ausnahmenliste SA enthalten ist. Für den Fall, daß keine Ausnahmenliste SA existiert, muß der Prozessor P für den Fall, daß sämtliche vorgenommenen Vergleiche negatives Ergebnis geliefert haben, überprüfen, ob die vom Terminal T aufgerufene Basisfunktion B die schließende Basisfunktion BC ist. Auf diese Weise kann sichergestellt werden, daß auch bei nicht vorhandener Ausnahmenliste SA die schließende Basisfunktion BC jederzeit aufrufbar ist.

Führt keine der Vergleichsmöglichkeiten zu einem positiven Ergebnis, dann wird dies dem Terminal T in Form einer selektiven Fehlermeldung mitgeteilt. Aus dieser selektiven Fehlermeldung geht beispielsweise hervor, daß der Grund für die Zurückweisung die Nichtzulässigkeit der Abarbeitung der Basisfunktion B im vorliegenden Anwendungszustand Z ist. Andere selektive Fehlermeldungen können beispielsweise anzeigen, daß die PIN-Nummer falsch eingegeben wurde oder eine PIN-Prüfung noch nicht stattgefunden hat.

In den meisten Fällen wird es genügen, mit einem Terminal T nur eine Anwendung auszuführen. In diesen Fällen genügt es, wenn erst nach Beendigung oder Abbruch einer vorher aktivierten Anwendung eine weitere Anwendung aufgerufen werden kann. Läßt man aber an einem Terminal T mehrere Anwendungen zu, dann kann es sinnvoll sein, diese Anwendungen auch ineinander verschachtelt aufzurufen. In diesen Fällen ist es dann möglich, nach der Übermittlung eines Antwortsignals von der Chipkarte K zum Terminal T, ein Applikationskommando noch vor Beendigung einer Anwendung zur Chipkarte K zu übertragen. Wenn ein Applikationskommando vor Beendigung einer Anwendung die Chipkarte K erreicht, wird der Inhalt des Zustandsspeicherbereichs ZS und eine Kennzeichnung, die die gegenwärtig laufende Anwendung eindeutig benennt, in einem Hilfsspeicher abgelegt. Dieser Hilfsspeicher kann beispielsweise im Gemeinschaftsdatenfeld CDF eingerichtet sein. Nach Sicherung dieser Daten im Hilfsspeicher wird die teilweise Initialisierung des Zustandsspeicherbereichs ZS vorgenommen. Die mit dem Applikationskommando bezeichnete eingeschobene Anwendung kann in oben beschriebener Weise bearbeitet werden. Nach Beendigung der eingeschobenen Anwendung werden die im Hilfsspeicher abgelegten Daten der unterbrochenen Anwendung wieder an ihre ursprünglichen Speicherstellen zurücktransferiert. Der Ablauf der vorher unterbrochenen Anwendung kann fortgesetzt werden.

## Patentansprüche

1. Verfahren zur Verhinderung unzulässiger Abweichungen vom Ablaufprotokoll einer Anwendung bei einem Datenaustauschsystem, das mindestens aus einem Terminal (T) und mindestens einem tragbaren, mindestens einen Prozessor (P) und mindestens einen Speicher (S) enthaltenden, wenigstens für eine Anwendung nutzbaren Datenträger (K) besteht,
wobei dem Datenträger (K) vom Terminal Funktionskommandos übermittelbar sind, die jeweils mindestens eine Basisfunktionsbezeichnung (Bk) einer Basisfunktion (B) enthalten, die als nächste ausgeführt werden soll, **gekennzeichnet durch** folgende Verfahrensschritte:
a) zum Datenaustausch wird der Datenträger (K) mit dem Terminal (T) verbunden, wodurch ein im Speicher (S) des Datenträgers vorhandener Zustandsspeicherbereich (ZS) in einen Grundzustand versetzt wird,
b) das Terminal (T) übermittelt an den Datenträger (K) ein Applikationskommando, das eine dem Terminal (T) zugeordnete Anwendung bezeichnet,
c) das Terminal (T) übermittelt an den Datenträger (K) ein Funktionskommando,
c) diese Basisfunktionsbezeichnung (Bk) wird im Datenträger (K) mit im Speicher (S) des Datenträgers (K) bezüglich der vorher bezeichneten Anwendung gespeicherten Basisfunktionsbezeichnungen (Bn) verglichen, die im vorliegenden, durch eine Eintragung im Zustandsspeicherbereich (ZS) fixierten, Protokollzustand zulässig sind,
e) nur bei positivem Vergleichsergebnis wird die der zum Datenträger (K) übermittelten Basisfunktionsbezeichnung (Bk) zugeordnete Basisfunktion (B) im Datenträger (K) ausgeführt,
f) nach erfolgreicher Basisfunktionsausführung
f1) werden die im Zustandsspeicherbereich (ZS) abgelegten Daten dem neuen Protokollzustand angepaßt,
f2) wird vom Datenträger (K) zum Terminal (T) ein Antwortsignal übertragen,
g) bis der Ablauf der Anwendung beendet ist oder abgebrochen wird, wird vom Terminal (T), nach der Ubertragung eines Antwortsignals vom Datenträger (K) zum Terminal (T), durch Übermittelung eines Funktionskommandos an den Datenträger (K) die nächste auszuführende Basisfunktion (B) aufgerufen.

2. Verfahren nach Anspruch 1, **dadurch gekennzeichnet,** daß durch die Übermittlung des Applikationskommandos vom Terminal (T) zum Datenträger (K) eine teilweise Initialisierung des Zustandsspeicherbereichs (ZS) ausgelöst wird.

3. Verfahren nach mindestens einem der vorhergehenden Ansprüche, **dadurch gekennzeichnet,** daß die Übermittlung des Applikationskommandos vom Terminal (T) zum Datenträger (K) die Eintragung einer Blocknummer (STB) im Zustandsspeicherbereich (ZS) bewirkt und daß diese Blocknummer (STB) den Platz im Speicher (S) des Datenträgers (K) bezeichnet, an dem die bei der mit dem Applikationskommando bezeichneten Anwendung im jeweils vorliegenden Protokollzustand (Z) zulässigen Basisfunktionsbezeichnungen (Bn) abgelegt sind.

4. Verfahren nach mindestens einem der vorhergehenden Ansprüche, **dadurch gekennzeichnet,** daß die Übertragung einer Information vom Terminal (T) zum Datenträger (K) nur dann erfolgen kann, wenn vorher ein Antwortsignal vom Datenträger (K) zum Terminal (T) übermittelt wurde.

5. Verfahren nach mindestens einem der vorhergehenden Ansprüche, **dadurch gekennzeichnet,** daß durch Übermittlung eines Applikationskommandos vom Terminal (T) zum Datenträger (K) erst nach Beendigung oder Abbruch einer vorher aktivierten Anwendung eine weitere Anwendung aufgerufen werden kann.

6. Verfahren nach mindestens einem der Ansprüche 1 bis 4, **dadurch gekennzeichnet,** daß bei Übermittlung eines Applikationskommandos vor Beendigung einer Anwendung mindestens der Inhalt des Zustandsspeicherbereichs (ZS) in einem Hilfsspeicher abgelegt wird, daß danach die teilweise Initialisierung des Zustandsspeicherbereichs (ZS) erfolgt und daß nach erfolgter Initialisierung die mit dem Applikationskommando bezeichnete eingeschobene Anwendung bearbeitet wird.

7. Verfahren nach Anspruch 6,
**dadurch gekennzeichnet,** daß nach Beendigung der eingeschobenen Anwendung die im Hilfsspeicher abgelegten, der unterbrochenen Anwendung zugeordneten Daten wieder an ihre ursprünglichen Speicherstellen zurücktransferiert werden und daß der Ablauf der unterbrochenen Anwendung fortgesetzt wird.

8. Verfahren nach einem der vorhergehenden Ansprüche, **dadurch gekennzeichnet,** daß zusätzlich zur Basisfunktionsbezeichnung (Bk) im Funktionskommando enthaltene Basisfunktionseingangsparameter an den Datenträger (K) übermittelt werden.

9. Verfahren nach mindestens einem der Ansprüche 3 bis 8, **dadurch gekennzeichnet,** daß nach Erhalt eines Funktionskommandos überprüft wird, ob eine Blocknummer (STB) im Zustandsspeicherbereich (ZS) eingetragen ist.

10. Verfahren nach einem der vorhergehenden Ansprüche, **dadurch gekennzeichnet,** daß ein erster Speicherbereich (S1) des Speichers (S) daraufhin überprüft wird, ob eine Eintragung zum vorliegenden Protokollzustand (Z) der mit dem Applikationskommando bezeichneten Anwendung in diesem ersten Speicherbereich (S1) vorhanden ist.

11. Verfahren nach Anspruch 10, **dadurch gekennzeichnet,** daß im Falle einer vorhandenen Eintragung zum vorliegenden Protokollzustand (Z) die bezüglich dieses Protokollzustandes (Z) im ersten Speicherbereich (S1) gespeicherten Basisfunktionsbezeichnungen (Bn) mit der, mit dem Funktionskommando zum Datenträger (K) übermittelten Funktionsbezeichnung (Bk) verglichen werden.

12. Verfahren nach mindestens einem der Ansprüche 10 oder 11, **dadurch gekennzeichnet,** daß im Falle einer fehlenden Eintragung zum vorliegenden Protokollzustand (Z) bzw. einer Nichtübereinstimmung der übermittelten und der gespeicherten Basisfunktionsbezeichnungen (Bk,Bn) im ersten Speicherbereich (S1) in einem zweiten Speicherbereich (S2) des Speichers (S) überprüft wird, ob die zum Datenträger (K) übermittelte Basisfunktionsbezeichnung (Bk) in diesem zweiten Speicherbereich (S2) bezüglich der mit dem Applikationskommando bezeichneten Anwendung, unabhängig vom vorliegenden Protokollzustand (Z) eingetragen ist.

13. Verfahren nach mindestens einem der vorhergehenden Ansprüche 10 bis 12, **dadurch gekennzeichnet,** daß im Falle einer fehlenden Eintragung zum vorliegenden Protokollzustand Z bzw. einer Nichtübereinstimmung der übermittelten und der gespeicherten Basisfunktionsbezeichnung (Bk, Bn) sowohl im ersten Speicherbereich (S1) als auch im zweiten Speicherbereich (S2) überprüft wird, ob die übermittelte Basisfunktionsbezeichnung (Bk) die Basisfunktionsbezeichnung (BC) für die schließende Basisfunktion (B) ist.

14. Verfahren nach mindestens einem der vorhergehenden Ansprüche, **dadurch gekennzeichnet,** daß nach erfolgreicher Ausführung einer Basisfunktion (B) die Bezeichnung dieser Basisfunktion (B) in einem Basisfunktionsspeicherplatz (BZ) des Zustandsspeicherbereichs (ZS) eingetragen wird.

15. Verfahren nach mindestens einem der Ansprüche 10 bis 14, **dadurch gekennzeichnet,** daß bei Nichtübereinstimmung der zum Datenträger (K) übermittelten Basisfunktionsbezeichnung (Bk) mit den entsprechenden Eintragungen im Speicher (S) diese übermittelte Basisfunktionsbezeichnung (Bk) mit der im Basisfunktionsspeicherplatz (BZ) des Zustandsspeicherbereichs (ZS) vermerkten Bezeichnung der zuletzt erfolgreich ausgeführten Basisfunktion (B) verglichen wird.

16. Verfahren nach mindestens einem der vorhergehenden Ansprüche, **dadurch gekennzeichnet,** daß zu einer Basisfunktionsausführung eventuell erforderliche, im Zustandsspeicherbereich (ZS) abgelegte Zugriffsrechte auf Daten im Datenträger (K) überprüft werden.

17. Verfahren nach mindestens einem der Ansprüche 10 bis 16, **dadurch gekennzeichnet,** daß eine im ersten Speicherbereich (S1) in Verbindung mit einer gespeicherten Basisfunktionsbezeichnung (Bn) abgelegte Folgezustandsbezeichnung (ZF), nach erfolgreicher Ausführung dieser der gespeicherten Basisfunktionsbezeichnung (Bn) zugeordneten Basisfunktion (B), im Protokollzustandsspeicherplatz (Zi) des Zustandsspeicherbereichs (ZS) eingetragen wird.

18. Verfahren nach mindestens einem der vorhergehenden Ansprüche, **dadurch gekennzeichnet,** daß nach erfolgreicher Basisfunktionsausführung zur Anpassung an den neuen Protokollzustand (Z) Informationen zum Protokollablauf und/oder zur Datenzugriffskontrolle im Zustandsspeicherbereich (ZS) eingetragen werden.

19. Verfahren nach Anspruch 18, **dadurch gekennzeichnet,** daß die Informationen zur Datenzugriffskontrolle getrennt nach anwendungsbezogenen und globalen Daten im Zustandsspeicherbereich (ZS) eingetragen werden.

20. Verfahren nach mindestens einem der vorhergehenden Ansprüche, **dadurch gekennzeichnet,** daß bei negativem Vergleichsergebnis eine selektive Fehlermeldung vom Datenträger (K) zum Terminal (T) übermittelt wird.

21. Vorrichtung zur Durchführung des Verfahrens nach mindestens einem der Ansprüche 1 bis 20, bei der der Speicher (S) in einen gemeinschaftliche und anwendungsbezogene Daten enthaltenden Datenspeicher (EEPROM), einen auch eine Ein-/Ausgangsschnittstelle (I/O) bedienenden Arbeitsspeicher (RAM) und einen ein Betriebssystem (BTS) und mehrere Basisfunktionen (B) enthaltenden Maskenspeicher (ROM) eingeteilt ist, **dadurch gekennzeichnet,** daß der Datenspeicher (EEPROM) für jede mögliche Anwendung eine die Zulässigen Protokollabläufe enthaltende Steuerliste (STL) enthält und daß im Arbeitsspeicher (RAM) der die jeweiligen Protokollzustände (Z) aufnehmende Zustandsspeicher (ZS) enthalten ist.

22. Vorrichtung nach Anspruch 21, **dadurch gekennzeichnet,** daß die Steuerliste (STL) in einen Steuerlistenkopf (SK) und einen Steuerlistenrumpf (SR) aufgeteilt ist.

23. Vorrichtung nach Anspruch 22, **dadurch gekennzeichnet,** daß im Steuerlistenkopf (SK) linear nacheinander die Steuerlistenkopflänge (SKL) und für jeden bei der Anwendung möglichen Zustand (Z), beginnend mit dem ersten Zustand (Z1) ein Datenpaar gespeichert ist, das aus einer die beim jeweiligen Zustand (Z) ausführbare Basisfunktionsanzahl (SBA) angebenden Information und aus einem auf eine Speicherstelle im Steuerlistenrumpf (SR) weisenden Pointer (SBP) besteht.

24. Vorrichtung nach mindestens einem der Ansprüche 22 oder 23, **dadurch gekennzeichnet,** daß der Steuerlistenrumpf (SR) wenigstens aus einer, aus jeweils mindestens einem Datentupel bestehenden, jeweils einem Zustand (Z) Zugeordneten Gruppe besteht und daß die Datentupel jeweils aus einer gespeicherten Basisfunktionsbezeichnung (Bn) und einer Folgezustandsbezeichnung (ZF) bestehen.

25. Vorrichtung nach mindestens einem der Ansprüche 23 oder 24, **dadurch gekennzeichnet,** daß der einem bestimmten Zustand (Z) zugeordnete Pointer (SBP) jeweils auf den Beginn einer dem gleichen Zustand (Z) Zugeordneten Gruppe im Steuerlistenrumpf (SR) zeigt.

26. Vorrichtung nach mindestens einem der Ansprüche 21 bis 25, **dadurch gekennzeichnet,** daß einer Steuerliste (STL) eine Ausnahmenliste (SA) zugeordnet ist.

27. Vorrichtung nach Anspruch 26, **dadurch gekennzeichnet,** daß im Steuerlistenkopf (SK) unmittelbar nach der Steuerlistenkopflänge (SKL) eine Ausnahmenlistenblocknummer (SAN) eingetragen ist, die direkt oder indirekt den Speicherplatz angibt, an dem die Ausnahmenliste (SA) gespeichert ist.

28. Vorrichtung nach mindestens einem der Ansprüche 26 oder 27, **dadurch gekennzeichnet,** daß in der Ausnahmenliste (SA) nacheinander die Basisfunktionsbezeichnungen (Bn) der Basisfunktionen (B) angegeben sind, die unabhängig vom vorliegenden Protokollzustand jederzeit ausführbar sind.

29. Vorrichtung nach mindestens einem der vorhergehenden Ansprüche 21 bis 28, **dadurch gekennzeichnet,** daß im Zustandsspeicherbereich (ZS) Speicherplätze für bestimmte Informationen zum Protokollablauf und/oder zur Datenzugriffskontrolle vorhanden sind.

30. Vorrichtung nach Anspruch 29, **dadurch gekennzeichnet,** daß im Zustandsspeicherbereich (ZS) zum Protokollablauf je ein Speicherplatz für die Blocknummer (STB) der der vorliegenden Anwendung zugeordneten Steuerliste (STL), ein Basisfunktionsspeicherplatz (BZ) für die Basisfunktionsbezeichnung (Bk) der zuletzt erfolgreich ausgeführten Basisfunktion (B) und ein Protokollzustandsspeicherplatz (Zi) für den Protokollzustand (Z) nach der zuletzt erfolgreich ausgeführten Basisfunktion (B) vorhanden ist.

31. Vorrichtung nach mindestens einem der vorhergehenden Ansprüche 29 oder 30, **dadurch gekennzeichnet,** daß die im Zustandsspeicherbereich (ZS) vorhandenen Speicherplätze zur Datenzugriffskontrolle in globale und in anwendungsbezogene Speicherplätze aufgeteilt sind.

32. Vorrichtung nach Anspruch 31, **dadurch gekennzeichnet,** daß je ein Speicherplatz für das anwendungsbezogene Speichern einer durchgeführten PIN-Prüfung (PIN) für einige sich voneinander unterscheidende durchgeführte Authentizitätsprüfungen (AUTH1,AUTH2) und ein globaler Speicherplatz für das Speichern einer durchgeführten PIN-Prüfung (GPIN) vorhanden sind.

## Claims

1. A method for preventing unauthorized deviations from an application development protocol in a data exchange system which consists of at least one terminal (T) and of at least one portable data carrier (K) which contains at least one processor (P) and at least one memory (S) and can be used for at least one application, in which method function commands can be transmitted to the data carrier (K) from the terminal, which commands contain in each case at least one basic function designation (Bk) of a basic function (B) which is to be executed as the next one, characterized by the following method steps:
a) to exchange data, the data carrier (K) is connected to the terminal (T) as a result of which a state memory area (ZS) existing in the memory (S) of the data carrier is set to a basic state,
b) the terminal (T) transmits to the data carrier (K) an application command which designates an application allocated to the terminal (T),
c) the terminal (T) transmits a function command to the data carrier (K),
d) this basic function designation (Bk) is compared in the data carrier (K) with basic function designations (Bn) stored in the memory (S) of the data carrier (K) with respect to the previously designated application, which designations are authorized in the present protocol state fixed by an entry in the state memory area (ZS),
e) the basic function (B) allocated to the basic function designation (Bk) transmitted to the data carrier (K) is only executed in the data carrier (K) when the result of the comparison is positive,
f) after successful execution of the basic function
f1) the data stored in the state memory area (ZS) are adapted to the new protocol state,
f2) a response signal is transmitted from the data carrier (K) to the terminal (T),
g) until the development of the application is terminated or is aborted, the next basic function (B) to be executed is called up by the terminal (T) by transmitting a function command to the data carrier (K) after the transmission of a response signal from the data carrier (K) to the terminal (T).

2. Method according to Claim 1, characterized in that a partial initialization of the state memory area (ZS) is triggered by the transmission of the application command from the terminal (T) to the data carrier (K).

3. Method according to at least one of the preceding claims, characterized in that the transmission of the application command from the terminal (T) to the data carrier (K) effects the entering of a block number (STB) in the state memory area (ZS) and in that this block number (STB) designates the location in the memory (S) of the data carrier (K) at which the basic function designations (Bn), authorized in the application designated by the application command in the protocol state (Z) existing in each case, are stored.

4. Method according to at least one of the preceding claims, characterized in that transmission of an information item from the terminal (T) to the data carrier (K) can only occur if a response signal has previously been transmitted from the data carrier (K) to the terminal (T).

5. Method according to at least one of the preceding claims, characterized in that a further application can only be called up by transmission of an application command from the terminal (T) to the data carrier (K) after a previously activated application has been terminated or aborted.

6. Method according to at least one of Claims 1 to 4, characterized in that on transmission of an application command before termination of an application, at least the content of the state memory area (ZS) is stored in an auxiliary memory, in that then the state memory area (ZS) is partially initialized and in that, after completed initialization, the inserted application designated by the application command is processed.

7. Method according to Claim 6, characterized in that after termination of the inserted application, the data stored in the auxiliary memory and allocated to the interrupted application are again transferred back to their original memory locations and in that the development of the interrupted application is continued.

8. Method according to one of the preceding claims, characterized in that, in addition to the basic function designation (Bk), basic function input parameters contained in the function command are transmitted to the data carrier (K).

9. Method according to at least one of Claims 3 to 8, characterized in that after a function command has been received, a check is carried out as to whether a block number (STB) is entered in the state memory area (ZS).

10. Method according to one of the preceding claims, characterized in that a first memory area (S1) of the memory (S) is checked to see whether an entry to the present protocol state (Z) of the application designated by the application command exists in this first memory area (S1).

11. Method according to Claim 10, characterized in that, in the case of an existing entry to the present protocol state (Z), the basic function designations (Bn) stored with respect to this protocol state (Z) in the first memory area (S1) are compared with the function designation (Bk) transmitted to the data carrier (K) with the function command.

12. Method according to at least one of Claims 10 or 11, characterized in that in the case of a missing entry to the existing protocol state (Z) or a non-correspondence of the transmitted and the stored basic function designations (Bk, Bn) in the first memory area (S1), a check is made in a second memory area (S2) of the memory (S) as to whether the basic function designation (Bk) transmitted to the data carrier (K) is entered in this second memory area (S2) with respect to the application designated by the application command, independently of the existing protocol state (Z).

13. Method according to at least one of the preceding Claims 10 to 12, characterized in that in the case of a missing entry to the present protocol state (Z) or a non-correspondence of the transmitted and of the stored basic function designation (Bk, Bn), a check is made both in the first memory area (S1) and in the second memory area (S2) as to whether the transmitted basic function designation (Bk) is the basic function designation (BC) for the closing basic function (B).

14. Method according to at least one of the preceding claims, characterized in that after successful execution of a basic function (B), the designation of this basic function (B) is entered in a basic function memory location (BZ) of the state memory area (ZS).

15. Method according to at least one of Claims 10 to 14, characterized in that in the case of non-correspondence of the basic function designation (Bk), transmitted to the data carrier (K), with the corresponding entries in the memories (S), this transmitted basic function designation (Bk) is compared with the designation, noted in the basic function memory location (BZ) of the state memory area (ZS), of the last basic function (B) successfully executed.

16. Method according to at least one of the preceding claims, characterized in that for executing a basic function, any required rights of access to data in the data carrier (K) stored in the state memory area (ZS) are checked.

17. Method according to at least one of Claims 10 to 16, characterized in that a successor state designation (ZF) stored in the first memory area (S1) in connection with a stored basic function designation (Bn) is entered in the protocol state memory location (Zi) of the state memory area (ZS) after successful execution of this basic function (B) allocated to the stored basic function designation (Bn).

18. Method according to at least one of the preceding claims, characterized in that information items for protocol development and/or for data access control are entered in the state memory area (ZS) for adaptation to the new protocol state (Z) after successful execution of the basic function.

19. Method according to Claim 18, characterized in that the information items are entered separately in accordance with application-related and global data in the state memory area (ZS) for data access control.

20. Method according to at least one of the preceding claims, characterized in that a selective error message is transmitted from the data carrier (K) to the terminal (T) in the case of a negative result of the comparison.

21. Device for carrying out the method according to at least one of Claims 1 to 20, in which the memory (S) is divided into a data memory (EEPROM) containing common and application-related data, a main memory (RAM) also serving an input/output interface (I/O), and a mask memory (ROM) containing an operating system (BTS) and a number of basic functions (B), characterized in that the data memory (EEPROM) contains a control list (STL) containing the authorized protocol developments for each possible application, and in that the main memory (RAM) contains the state memory (ZS) accommodating the respective protocol states (Z).

22. Device according to Claim 21, characterized in that the control list (STL) is divided into a control list header (SK) and a control list body (SR).

23. Device according to Claim 22, characterized in that in the control list header (SK), the control list header length (SKL) and, for each state (Z) possible in the application, beginning with the first state (Z1), a data pair which consists of an information item specifying the number (SBA) of basic functions which can be executed in the respective state (Z) and of a pointer (SBP) pointing to a memory location in the control list body (SR) are linearly successively stored.

24. Device according to at least one of Claims 22 or 23, characterized in that the control list body (SR) consists at least of one group consisting of in each case at least one data tuple and allocated in each case to one state (Z), and in that the data tuples in each case consist of a stored basic function designation (Bn) and a successor state designation (ZF).

25. Device according to at least one of Claims 23 or 24, characterized in that the pointer (SBP) allocated to a particular state (Z) in each case points to the beginning of a group allocated to the same state (Z) in the control list body (SR).

26. Device according to at least one of Claims 21 to 25, characterized in that an exception list (SA) is allocated to a control list (STL).

27. Device according to Claim 26, characterized in that an exception list block number (SAN) which directly or indirectly specifies the memory location at which the exception list (SA) is stored is entered immediately after the control list header length (SKL) in the control list header (SK).

28. Device according to at least one of Claims 26 or 27, characterized in that the basic function designations (Bn) of the basic functions (B) which can be executed at any time independently of the present protocol state are specified successively in the exception list (SA).

29. Device according to at least one of the preceding Claims 21 to 28, characterized in that memory locations for particular information items on the protocol development and/or on the data access control exist in the state memory area (ZS).

30. Device according to Claim 29, characterized in that the state memory area (ZS) for the protocol development contains one memory location each for the block numbers (STB) of the control list (STL) allocated to the present application, one basic function memory location (BZ) for the basic function designation (Bk) of the last basic function (B) successfully executed and one protocol state memory location (Zi) for the protocol state (Z) following the last basic function (B) successfully executed.

31. Device according to at least one of the preceding Claims 29 or 30, characterized in that the memory locations for data access control existing in the state memory area (ZS) are divided into global and into application-related memory locations.

32. Device according to Claim 31, characterized in that one memory location each exists for the application-related storing of a PIN test (PIN) carried out for some mutually differing authenticity tests (AUTH1, AUTH2) carried out and a global memory location for storing a PIN test (GPIN) carried out.

## Revendications

1. Procédé pour éviter des écarts inadmissibles du protocole de déroulement d'une application, dans un système d'échanges de données, qui est constitué au moins d'un terminal (T) et au moins d'un support de données (K) mobile et qui comporte au moins un processeur (P) et au moins une mémoire (S) et qui peut être utile au moins pour une application,
du type dans lequel, au support de données (K) peuvent être transmises, à partir du terminal, des commandes de fonctionnement qui contiennent au moins une désignation de fonctionnement de base (Bk) d'une fonction de base (B) qui doit être exécutée comme directement suivante, caractérisé par les phases opératoires suivantes :
a) on relie, pour l'échange de données, le support de données (K) au terminal (T), ce par quoi une zone mémoire d'états (ZS) qui est présente dans la mémoire (S) du support de données est transférée dans un état de base,
b) le terminal (T) transmet au support de données (K) une commande d'application qui désigne une application associée au terminal (T),
c) le terminal (T) transmet au support de données (K) une commande de fonctionnement,
d) on compare, dans le support de données (K), cette désignation de fonction de base (Bk) aux désignations de fonction de base (Bn), qui sont mémorisées dans la mémoire (S) du support de données (K) en ce qui concerne l'application désignée auparavant et qui sont admises dans le présent état de protocole fixé par un enregistrement dans la zone mémoire d'états (ZS),
e) on éxecute dans le support de données (K) et uniquement dans le cas d'un résultat de comparaison positif, la fonction de base (B) associée à la désignation de fonction de base (Bk) transmise au support de données (K),
f) après une exécution couronnée de succès de la fonction de base,
f1) on adapte au nouvel état de protocole les données extraites dans la zone mémoire d'état (ZS),
f2) on transmet un signal de réponse du support de données (K) au terminal (T),
g) jusqu'à la fin du déroulement de l'application ou jusqu'à son interruption, on applique la fonction de base (B) directement suivante à exécuter, par le terminal (T) au support de données, après la transmission d'un signal de réponse du support de données (K) au terminal (T), par l'intermédiaire d'une commande de fonctionnement.

2. Procédé suivant la revendication 1, caractérisé en ce que, à l'aide de la transmission de la commande d'application du terminal (D) au support de données (K), on effectue une initialisation partielle de la zone de mémoire d'états (ZS).

3. Procédé suivant l'une au moins des revendications précédentes, caractérisé en ce que la transmission de la commande d'application du terminal (T) au support de données (K) provoque l'enregistrement d'un numéro de bloc (STB) dans la zone de mémoire d'états (ZS) et en ce que ce numéro de bloc (STB) désigne la place, dans la mémoire (S) du support de données (K), à laquelle sont extraites les désignations de fonctionnement de base (Bn) admissibles lors de l'application désignée par la commande d'application dans l'état de protocole (Z) respectivement présent.

4. Procédé suivant l'une au moins des revendications précédentes, caractérisé en ce que l'on ne peut effectuer la transmission d'une information du terminal (T) au support de données (K) que lorsqu'auparavant un signal de réponse a été transmis du support de données (K) au terminal (T).

5. Procédé suivant l'une au moins des revendications précédentes, caractérisé en ce qu'à l'aide de la transmission d'une commande d'application du terminal (T) au support de données (K), on peut appeler, juste après l'arrêt ou l'interruption d'une application active auparavant, une autre application.

6. Procédé suivant l'une au moins des revendications 1 à 4, caractérisé en ce que, lors de la transmission d'une commande d'application avant la fin d'une application, on dérive au moins le contenu de la zone mémoire d'états (ZS) dans une mémoire auxiliaire, en ce qu'après cela, on effectue l'initialisation partielle de la zone mémoire d'états (ZS) et en ce qu'après l'initialisation effectuée, on traite l'application introduite et désignée par la commande d'application.

7. Procédé suivant la revendication 6, caractérisé en ce qu'après la fin de l'application introduite, on retransfert les données associées à l'application interrompue et dérivée dans la mémoire auxiliaire à nouveau dans leurs positions initiales de mémoire et en ce que le déroulement de l'application interrompue continue.

8. Procédé suivant l'une au moins des revendications précédentes, caractérisé en ce que, en plus, pour la désignation de la fonction de base (Bk), on transmet au support de données (K) des paramètres d'entrée de fonction de base contenus dans la commande de fonctionnement.

9. Procédé suivant l'une au moins des revendications 3 à 8, caractérisé en ce qu'après le maintien d'une commande de fonctionnement on contrôle si un numéro de bloc (STB) est enregistrée dans la zone de mémoire d'états (ZS).

10. Procédé suivant l'une au moins des revendications précédentes, caractérisé en ce qu'on contrôle première zone de mémoire (S1) de la mémoire (S), si un enregistrement, pour l'état protocole (Z) présent de l'application désignée par la commande d'application, est dans cette première zone de mémoire (S1).

11. Procédé suivant la revendication 10, caractérisé en ce que, dans le cas d'un maintien pour l'état de protocole (Z) présent, on compare les désignations de fonctions de base (Bn) qui sont mémorisées, concernant cet état de protocole (Z), dans la première zone de mémoire (S1), à la désignation de fonction transmise avec la commande de fonctionnement au support de données (K).

12. Procédé suivant l'une au moins des revendications 10 ou 11, caractérisé en ce que, dans le cas d'un maintien erroné pour l'état de protocole (Z) présent, ou dans le cas d'un désaccord entre la désignation de fonction de base transmise et la désignation de fonction de base mémorisée (Bk,Bn), on contrôle, dans la première zone de mémoire (S1) et dans une deuxième zone de mémoire (S2) de la mémoire (S), si la désignation de fonction de base (Bk) transmise au support de données (K) est enregistrée dans cette deuxième zone de mémoire (S2) en ce qui concerne l'application désignée par la commande d'application, et en fonction de l'état de protocole (Z) présent.

13. Procédé suivant l'une au moins des revendications 10 à 12, caractérisé en ce que, dans le cas d'un maintien erroné pour l'état de protocole présent (Z) ou dans le cas d'un désaccord entre la désignation de fonction de base transmise et de la désignation de fonction de base mémorisée (Bk,Bn), on contrôle non seulement dans la première zone de mémoire (S1), mais également dans la deuxième zone de mémoire (S2) si la désignation de fonction de base (Bk) transmise est la désignation de fonction de base (BC) de la fonction de base suivante (B).

14. Procédé suivant l'une au moins des revendications précédentes, caractérisé en ce qu'après l'exécution avec succès d'une fonction de base (B), on enregistre la désignation de cette fonction de base (B) dans une place de mémoire de fonctions de base (BZ) de la zone mémoire d'états (ZS).

15. Procedé suivant l'une au moins des revendications 10 à 14, caractérisé en ce que, lors du désaccord de la désignation de fonction de base (BK) transmise au support de données (K) avec le maintien correspondant dans la mémoire (S), on compare cette désignation de fonction de base (BK) transmise à la désignation, notée dans la place de mémoire de fonctions de base (BZ) de la zone mémoire d'états (ZS), de la fonction de base (B) exécutée avec succès en premier lieu.

16. Procédé suivant l'une au moins des revendications précédentes, caractérisé en ce que pour une exécution de fonction de base, on contrôle, dans le support de données (K), des droits d'accès aux données qui sont éventuellement nécessaires et qui sont extraits dans la zone de mémoire d'états (ZS).

17. Procédé suivant l'une au moins des revendications 10 à 16, caractérisé en ce que l'on enregistre à la place de mémoire d'états de protocole (Zi) de la zone de mémoire d'états (ZS), après l'exécution avec succès de cette fonction de base (B) associée à la désignation de fonction de base (Bn) mémorisée, une désignation (ZF) d'états successifs extraite dans la première zone de mémoire (S1) en liaison avec une désignation de fonction de base (Bn) mémorisée.

18. Procédé suivant l'une au moins des revendications précédentes, caractérisé en ce qu'après l'exécution de fonction de base couronnée de succès, on enregistre, dans la zone mémoire d'états (ZS), pour l'adaptation à un nouvel état de protocole (Z), des informations pour le déroulement du protocole et/ou pour le contrôle de l'accès des données.

19. Procédé suivant la revendication 18, caractérisé en ce que l'on sépare les informations pour le contrôle d'accès des données, et on les enregistre dans la zone de mémoire d'états (ZS), après des données globales et orientées vers l'application.

20. Procédé suivant l'une au moins des revendications précédentes, caractérisé en ce que, lorsque le résultat de la comparaison est négatif, on transmet un message d'erreur sélectif, du support de données (K) au terminal (T).

21. Dispositif pour la mise en oeuvre du procédé suivant l'une au moins des revendications 1 à 20, dans lequel la mémoire (S) est subdivisée en une mémoire de données (EEPROM) contenant des données d'utilité publique et orientées vers l'application, en une mémoire de travail (RAM) servant également une interface entrée/sortie (I/O) et en une mémoire de masques (ROM) comportant un système de travail (BTS) et plusieurs fonctions de base (B), caractérisé en ce que la mémoire de données (EEPROM) comporte, pour chaque utilisation possible, une liste de commande (STL) comportant les déroulements de protocole admissibles, et en ce que la mémoire d'états (ZS) contenant les états de protocole respectifs (Z) est comprise dans la mémoire de travail (RAM).

22. Dispositif suivant la revendication 21, caractérisé en ce que la liste de commande (STL) est divisée en une en-tête de liste de commande (SK) et en un corps de liste de commande (SR).

23. Dispositif suivant la revendication 22, caractérisé en ce que, dans l'en-tête de liste de commande (SK) sont mémorisées linéairement les unes après les autres les longueurs (SKL) d'en-tête de liste de commande, et pour chaque état (Z) possible lors de l'application, à partir du premier état (Z1), un couple de données qui est constitué d'une information indiquant le nombre de fonctions de base (SBA) susceptibles d'être exécutées lors de l'état (Z) respectif, et d'un pointeur (SBP) indiquant une position mémoire dans le corps de liste de commande (SR).

24. Dispositif suivant l'une au moins des revendications 22 ou 23, caractérisé en ce que le corps de liste de commande (SR) est constitué d'au moins un groupe associé à un état (Z) et constitué d'au moins un n-uplet de données, et que les n-uplets de données sont constitués respectivement d'une désignation de fonction de base (Bn) mémorisée et d'une désignation d'état (ZF) consécutif.

25. Dispositif suivant l'une au moins des revendications 23 ou 24, caractérisé en ce que le pointeur (SBP) associé à un état déterminé (Z) pointe, dans le corps de liste de commande (SR), sur le début d'un groupe associé au même état (Z).

26. Dispositif suivant l'une au moins des revendications 21 à 25, caractérisé en ce qu'à la liste de commande (STL) est associée une liste de réception (SA).

27. Dispositif suivant la revendication 26, caractérisé en ce que, dans l'en-tête de liste de commande (SK), est introduit, directement après la longueur de l'entête de liste de commande (SKL), un numéro de bloc (SAN) de liste de réception, qui indique directement ou indirectement la place de la mémoire à laquelle est mémorisée la liste de réception (SA).

28. Dispositif suivant l'une au moins des revendications 26 ou 27, caractérisé en ce que, dans la liste de réception (SA), sont indiquées successivement les désignations de fonctions de base (Bn) des fonctions de base (B) qui sont susceptibles d'être envoyées à chaque instant indépendamment de l'état de protocole présent.

29. Dispositif suivant l'une au moins des revendications 21 à 28, caractérisé en ce qu'il est prévu, dans la zone de mémoire d'états (ZS), des places de mémoire pour des informations déterminées, pour le déroulement du protocole et/ou pour le contrôle d'accès des données.

30. Dispositif suivant la revendication 29, caractérisé en ce que, dans la zone de mémoire d'états (ZS) pour le déroulement du protocole, sont prévues une place mémoire pour le numéro de bloc (STB) de la liste de commande (STL) associée à l'utilisation présente, une place mémoire (BZ) de fonctions de base pour la désignation de fonctions de base (Bk) de la fonction de base (B) exécutée en dernier lieu avec succès et une place mémoire (Zi) d'états de protocole pour l'état de protocole après la fonction de base (B) exécutée avec succès en dernier lieu.

31. Dispositif suivant l'une au moins des revendications 29 ou 30, caractérisé en ce que les places mémoires présentes dans la zone mémoire d'états (ZS) sont subdivisées, pour le contrôle d'accès de données, en des places mémoires globales et en des places mémoires concernant l'application.

32. Dispositif suivant la revendication 31, caractérisé en ce qu'il est prévu une place mémoire pour la mémorisation, concernant l'application, d'un test PIN effectué (PIN), pour des tests particuliers d'authenticité (AUTH1, AUTH2) et exécutés de manière différente les uns par rapport aux autres, et une place mémoire globale pour la mémorisation d'un test PIN effectué (GPIN).
